# EUROPÄISCHE PATENTANMELDUNG

(11) **EP 1 744 126 A1**
(43) Veröffentlichungstag der Anmeldung: **17.01.2007**
(21) Anmeldenummer: 05015325.3
(22) Anmeldetag: 14.07.2005
(51) Int. Cl.: G01D 5/12, G01D 5/26

(54) **Winkelmesseinrichtung**

(71) Anmelder: Carl Freudenberg KG, 69469 Weinheim (DE)
(72) Erfinder: Feurer, Georg, 69493 Hirschberg (DE)

(57) **Zusammenfassung**

Winkelmesseinrichtung (1), umfassend zumindest einen Messwertgeber (2), der eine Anzahl komplementärer, paarweise angeordneter signalgebender Elemente (3, 4) aufweist, die ein Muster von Signalen (5) erzeugen, wobei die Elemente (3, 4) zur Bildung einer Referenzmarke (6) an zumindest einer Stelle unregelmäßig ausgebildet sind sowie eine Einrichtung (7) zur Erfassung der Signale und eine Auswerteeinheit (8), wobei die Einrichtung (7) zumindest einen ersten (9) und einen zweiten Sensor (10) aufweist.

## Beschreibung

Die Erfindung betrifft eine Winkelmesseinrichtung, umfassend zumindest einen Messwertgeber, der eine Anzahl komplementärer, paarweise angeordneter signalgebender Elemente aufweist, die ein Muster von Signalen erzeugen, wobei die Elemente zur Bildung einer Referenzmarke an zumindest einer Stelle unregelmäßig ausgebildet sind sowie eine Einrichtung zur Erfassung der Signale und eine Auswerteeinheit.

### Technisches Gebiet

### Stand der Technik

Derartige Winkelmesseinrichtungen sind allgemein bekannt und finden ihren Einsatz beispielsweise bei der Winkelmessung an Kurbelwellen von Kraftmaschinen. Die signalbildenden Elemente können dabei durch eine Verzahnung oder durch magnetisiertes Material gebildet sein. Bei dem Zahnrad ergibt sich das Signalmuster durch abwechselnd angeordnete Zähne und Täler und bei dem magnetisierten Material ergibt sich das Signalmuster durch alternierend angeordnete Nord- und Südpole. Die unregelmäßige Stelle erlaubt eine Bestimmung der Winkellage einer Welle durch die Winkelmesseinrichtung. Zur Bestimmung der Winkellage wird das Signalmuster durch einen Sensor erfasst und in der Auswerteeinheit in ein binäres Signal umgewandelt. Es erfolgt zwischen den Signalwechseln eine Zeitmessung und durch Vergleich der gemessenen Zeiten kann zwischen regelmäßigen und unregelmäßigen Elementen unterschieden werden.

Dabei ist nachteilig, dass die Ermittlung des unregelmäßigen Musters verzögert erfolgt, da zur Zeitmessung das unregelmäßige Muster erst vollständig abgetastet sein muss. Die Zuverlässigkeit bei der Detektion der verschiedenen Muster ist vom Drehverhalten der zu vermessenden Welle abhängig. Bei Kurbelwellen treten, aufgrund von Schwingungen und Beschleunigungsvorgängen, Drehungleichförmigkeiten auf. Um eine zuverlässige Detektion der verschiedenen Muster zu gewährleisten, müssen sich die regelmäßigen Muster von den unregelmäßigen Mustern deutlich unterscheiden.

### Darstellung der Erfindung

Der Erfindung liegt die Aufgabe zugrunde, eine Winkelmesseinrichtung bereitzustellen, die eine geringe Empfindlichkeit gegenüber Drehungleichförmigkeiten aufweist, eine sofortige Unterscheidung der Muster durchführt und nur geringe Unterschiede zwischen regelmäßigen und unregelmäßigen Mustem erfordert.

Diese Aufgabe wird mit den Merkmalen von Anspruch 1 und 10 gelöst. Auf vorteilhafte Ausgestaltungen nehmen die Unteransprüche Bezug.

Zur Lösung der Aufgabe weist die Einrichtung zumindest einen ersten und einen zweiten Sensor auf. Die beiden Sensoren sind in Umfangsrichtung betrachtet vorzugsweise beabstandet voneinander angeordnet. Die Sensoren sind dann hintereinander angeordnet und tasten eine einzige mit signalgebenden Elementen versehene Spur ab. Die Bestimmung der Winkellage erfolgt durch eine Auswertung der Signale der Sensoren. Eine Zeitmessung ist nicht erforderlich, wodurch die Detektion des unregelmäßigen Elementes ohne Zeitverzögerung erfolgt. Da die Drohungleichförmigkeiten der zu vermessenden Welle beide Sensoren in gleichem Maße und Zeitgleich betrifft, ist die Zuverlässigkeit bei der Detektion der Muster besser. Dies macht sich gerade dann positiv bemerkbar, wenn sich regelmäßige Muster von den unregelmäßigen Mustern nur gering unterscheiden. In diesem Fall ist nämlich bei auftretenden Drehschwingungen eine Unterscheidung der Muster anhand einer Zeitmessung nicht möglich.

Der Abstand der Sensoren zueinander kann zwischen der Länge eines signalgebenden Elementes des unregelmäßigen Elementepaares und der Länge eines signalgebenden Elementes des regelmäßigen Elementepaares liegen. Ist beispielsweise die Länge des signalgebenden Elementes des unregelmäßigen Elementepaares größer als die Länge des signalgebenden Elementes des regelmäßigen Elementepaares, sind die empfangenen Signale der beiden Sensoren nur dann gleich, wenn sich ein unregelmäßiges Elementepaares vor den Sensoren befindet, wodurch dieses detektiert werden kann. Ebenso kann der Abstand der Sensoren zueinander zwischen der Länge des nichtsignalegebenden Elementes des unregelmäßigen Elementepaares und der Länge des nichtsignalgebenden Elementes des regelmäßigen Elementepaares liegen. Nichtsignalgebendes Elemente bedeutet in diesem Zusammenhang, dass diesem Signal eine digitale NULL zugeordnet ist.

Die Elemente der Elementepaare können im Wesentlichen die gleiche Länge aufweisen und die Länge eines unregelmäßigen Elementepaars kann im Vergleich zu den regelmäßigen Elementepaaren größer sein, wobei in einer vorteilhaften Ausgestaltung das unregelmäßige Elementepaar die doppelte Länge eines regelmäßigen Elementepaars aufweist. Eine erfindungsgemäße Winkelmesseinrichtung kann dann über den Umfang verteilt beispielsweise 58 Paare signalgebender Elemente mit einer Gesamtbreite von 6° und ein unregelmäßiges Elementepaar mit einer Breite von 12° aufweisen. Die Elemente eines Elementepaars weisen dabei die gleiche Länge auf und sind, wegen der symmetrischen Pole besonders einfach als magnetisierte Elemente herstellbar.

Die Elemente der Elementepaare können eine unterschiedliche Länge aufweisen und das Längenverhältnis kann an einem unregelmäßigen Elementepaar im Vergleich zu den regelmäßigen Elementepaaren umgekehrt sein. Dabei weisen alle Elementepaare die gleiche Länge auf.

Das Längenverhältnis der Elemente kann je Elementepaar 45:55 betragen. Bei einer Winkelbestimmung mit Zeitmessung muss das Verhältnis der Elementepaare wesentlich größer sein, da Drehungleichförmigkeiten zu einer zeitlichen Verschiebung der Signale führen und dadurch die Erkennung der beiden unterschiedlichen Muster nicht möglich ist. Dabei ist insbesondere bei magnetischen Winkelmesseinrichtungen die starke Asymmetrie der magnetischen Pole problematisch. Bei der Winkelbestimmung mit zwei Sensoren entfällt die Zeitmessung und der Einfluss der Drehungleichförmigkeiten ist gering. Daher kann ein Verhältnis der beiden Elemente deutlich näher an dem 50:50 Verhältnis gewählt werden. Dabei ist bei magnetischen Winkelmesseinrichtungen insbesondere Vorteilhaft, dass störende Einflüsse aufgrund starker Asymmetrie der Pole vermieden werden können.

Der Messwertgeber kann magnetische Signale erzeugen. Dabei wird nach passiven und aktiven Messwertgebem unterschieden. Bei passiven Messwertgebern sind die signalgebenden Elemente beispielsweise durch ein Zahnrad aus einem magnetisch leitfähigen Werkstoff gebildet. Diese Messwertgeber sind einfach und kostengünstig herstellbar, Aktive Messwertgeber sind durch magnetisierte signalgebende Elemente gebildet. Die Signale der aktiven Elemente sind besonders einfach durch Sensoren detektierbar. Magnetische Signale sind einfach auswertbar.

Der Messwertgeber kann optische Signale erzeugen. Optische Signale sind unempfindlich gegenüber elektromagnetischen Störeinflüssen angrenzender Einrichtungen. Optische Signale können beispielsweise durch Lochscheiben erzeugt werden.

Die Aufgabe wird auch durch ein Verfahren zur Winkelmessung mit einer Winkelmesseinrichtung gelöst, bei dem mittels der Auswerteeinheit der in Drehrichtung zweite Sensor überwacht wird, wobei bei einem durch den zweiten Sensor detektierten Signalwechsel das Signal des ersten Sensors überprüft wird und mit dem Signal des zweiten Sensors verglichen wird. Bei dem erfindungsgemäßen Verfahren kann die Zeitmessung zur Bestimmung der Länge der signalgebenden Elemente entfallen. Die Unterscheidung nach regelmäßigen und unregelmäßigen Elementen erfolgt durch Vergleich der durch die beiden Sensoren detektierten Signale. Dabei sind die Sensoren derart beabstandet angeordnet, dass bei den regelmäßigen Elementen unterschiedliche Signale empfangen werden. Aus dem Grund ist der Abstand größer als das kürzeste signalgebende Element und kleiner als das größte signalgebende Element. Bei dem Durchgang der Referenzmarke, welche durch ein unregelmäßiges Elemente gebildet ist, werden dementsprechend gleichartige Signale durch die Sensoren detektiert. Das unregelmäßige Elementepaar weist dabei ein anderes Längenverhältnis auf, beispielsweise ein längeres Elementepaar oder eine Umkehrung des Längenverhältnisses. Durch den unmittelbaren Vergleich der Signale erfolgt die Erkennung des unregelmäßigen Elementes ohne Zeitverzögerung. Da beide Sensoren im gleichen Maße den Drehungleichförmigkeiten der zu vermessenden Welle unterworfen sind, ist deren Einfluss auf das Messergebnis nicht vorhanden.

Mittels der Auswerteeinheit kann die Erkennung der verschiedenen Elemente besonders einfach durchgeführt werden. Hierbei wird bei Eintreffen einer an- oder absteigenden Flanke an einem Sensor der Pegel am anderen Sensor erfasst. Bei bekannter Drehrichtung kann aus dem vorliegenden Pegel dann eindeutig bestimmt werden, ob sich ein regel- oder unregelmäßiges Muster vor den Sensoren befindet.

### Kurzbeschreibung der Zeichnung

Einige Ausführungsbeispiele der erfindungsgemäßen Winkelmesseinrichtung werden nachfolgend anhand der Figuren näher erläutert. Diese zeigen, jeweils schematisch:
Fig. 1 eine Winkelmesseinrichtung;
Fig. 2 eine weitere Winkelmesseinrichtung;
Fig. 3 ein erstes erfindungsgemäßes Signalmuster;
Fig. 4 ein zweites erfindungsgemäßes Signalmuster.

### Ausführung der Erfindung

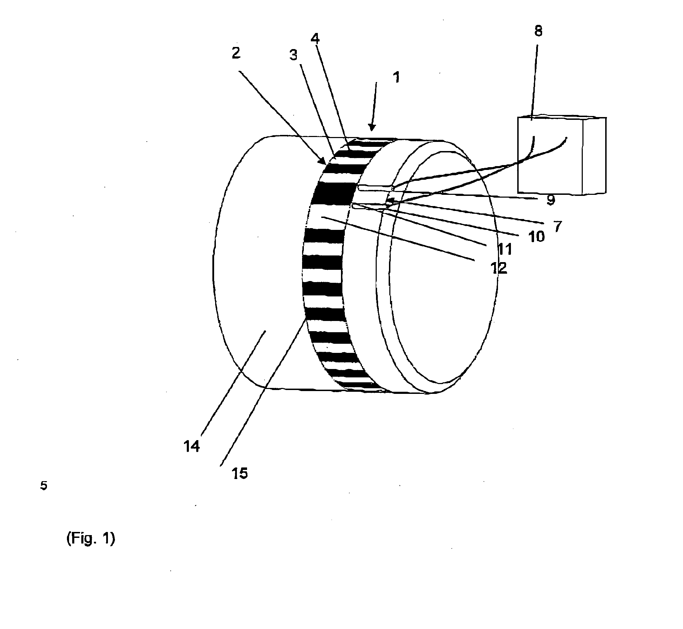

Figur 1 zeigt eine Winkelmesseinrichtung 1, die an einer Kurbelwelle 14 eines Kraftfahrzeugs angeordnet ist. Die Winkelmesseinrichtung 1 umfasst einen Messwertgeber 2, der aus 59 komplementär und paarweise angeordneten signalgebenden Elementen 3, 4 gebildet ist. Die signalgebenden Elemente 3, 4 sind in Umfangsrichtung hintereinander auf einer einzigen Spur 15 angeordnet. Die signalgebenden Elemente 3, 4 sind in dieser Ausführung aus einem thermoplastischen, mit magnetisiertem Ferrit durchsetztem Material gebildet.

Die signalgebenden Elemente 3, 4 sind dann jeweils durch Nord- und Südpole gebildet. Dabei erzeugen die Elemente 3, 4 ein Muster von Signalen 5. In anderen Ausgestaltungen können die signalgebenden Elemente 3, 4 auch aus einer Lochscheibe gebildet sein und dadurch optische Signale erzeugen. Zur Bildung einer Referenzmarke 6 sind die Elemente 3, 4 an einer Stelle unregelmäßig ausgebildet und bilden ein unregelmäßiges Elementepaar 11, 12 Die Winkelmesseinrichtung 1 umfasst femer eine Einrichtung 7 zur Erfassung der Signale und eine Auswerteeinheit 8. Die Einrichtung 7 weist zwei Sensoren 9, 10 auf, die in Umfangsrichtung betrachtet beabstandet voneinander angeordnet sind und die einzige Spur 15 abtasten. Dabei ist der Abstand der Sensoren 9, 10 zueinander größer als das kürzeste signalgebende Element 3 und kürzer als das signalgebende Element 11. Die Elementepaare 3, 4 weisen jeweils mit 6° die gleiche Länge auf, wobei die Länge des unregelmäßigen Elementepaars 11, 12 mit 12° im Vergleich zu den regelmäßigen Elementepaaren 3, 4 doppelt so groß ist und die Referenzmarke 6 bildet.

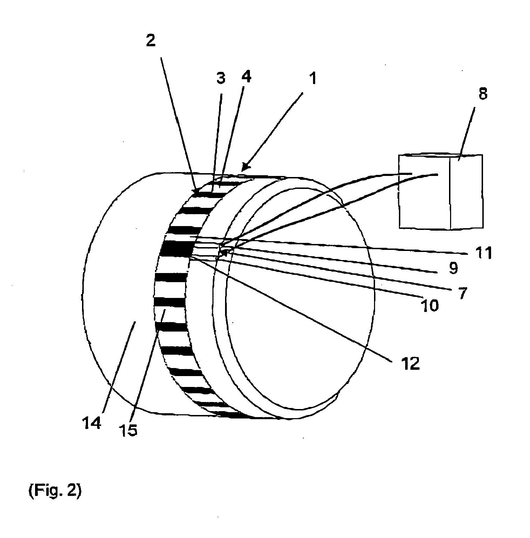

Figur 2 zeigt eine Winkelmesseinrichtung 1 gemäß Figur 1 bei dem die signalgebenden Elemente der Elementepaare 3, 4 eine unterschiedliche Länge aufweisen. Das Verhältnis der Elemente eines Elementepaars 3, 4 beträgt in dieser Ausführung 44:55. Das bedeutet bei einem magnetischen Messwertgeber, dass der Nordpol eine Breite von 3,3° und der Südpol eine Breite von 2,7° aufweist. Damit beträgt die Länge eines Elementepaars bei einer Anzahl von 60 Paaren 6°. Bei dem unregelmäßigen Element 11, 12 ist das Verhältnis umgekehrt und beträgt somit 55:45.

Zur Bestimmung des Winkels beispielsweise einer Kurbelwelle einer Verbrennungskraftmaschine wird mittels der Auswerteeinheit der in Drehrichtung zweite Sensor 10 überwacht, wobei bei einem durch den zweiten Sensor 10 detektierten Signalwechsel, also beispielsweise einem Polwechsel. das Signal 5 des ersten Sensors 9 erfasst wird. Liegt an dem zweiten Sensor 10 ein Wechsel von Nord- nach Südpol vor und vor dem ersten Sensor 9 befindet sich in diesem Moment ein Nordpol, so befinden sich die Elemente 3, 4 vor den Sensoren 9, 10. Liegt an dem zweiten Sensor 10 ein Wechsel von Nord- nach Südpol vor und vor dem ersten Sensor 9 befindet sich in diesem Moment ein Südpol, so befinden sich die Elemente 11. 12 vor den Sensoren 9, 10. Dabei übersetzt die Auswerteeinheit die Signale 5 der Sensoren 9, 10 in ein binäres Signal.

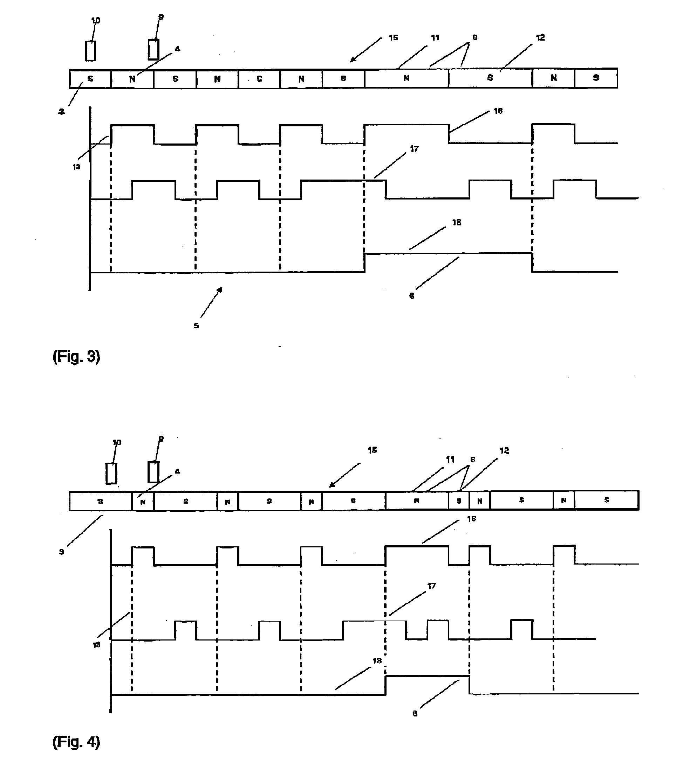

Figur 3 zeigt ein Muster von Signalen 5, welches aus einer Winkelmesseinrichtung 1 gemäß Figur 1 resultiert. Die Spur 15 weist dabei Elementepaare 3, 4 mit 6° und einer gleichen Länge auf. Die Länge des unregelmäßigen Elementepaars 11, 12 ist mit 12° im Vergleich zu den regelmäßigen Elementepaaren 3, 4 doppelt so groß ist und bildet die Referenzmarke 6. Dabei werden in der Auswerteeinheit die durch den zweiten Sensor 10 detektierten Signale in ein binäres Signalmuster 16 umgerechnet. Das Signalmuster 16 wird auf steigende Flanken überwacht. Bei Eintreffen einer steigenden Flanke 13 wird das Signal 18 auf den Pegel des Signals 17 gesetzt. Das Signal 18 behält diesen Wert solange bis eine weitere steigende Flanke 13 eintrifft und der Pegel dann gegebenenfalls verändert wird. Besitzt das Signal 18 den Wert EINS, so wurde die Referenzmarke 6 erkannt, besitzt das Signal 18 den Wert NULL, so befindet sich ein regelmäßiges Element vor den Sensoren 9, 10.

Figur 4 zeigt ein Muster von Signalen 5, welches aus einer Winkelmesseinrichtung 1 gemäß Figur 2 resultiert. Die signalgebenden Elemente der Elementepaare 3, 4 auf der Spur 15 weisen in dieser Ausführung eine unterschiedliche Länge auf. Das Verhältnis der Elemente eines Elementepaars 3, 4 beträgt in dieser Ausführung 44:55. Bei dem unregelmäßigen Element 11, 12 ist das Verhältnis umgekehrt und beträgt somit 55:45. Dabei werden in der Auswerteeinheit die durch den zweiten Sensor 10 detektierten Signale in ein binäres Signalmuster 16 umgerechnet. Das Signalmuster 16 wird auf steigende Flanken überwacht. Bei Eintreffen einer steigenden Flanke 13 wird das Signal 18 auf den Pegel des Signals 17 gesetzt. Das Signal 18 behält diesen Wert solange bis eine weitere steigende Flanke 13 eintrifft und der Pegel dann gegebenenfalls verändert wird. Besitzt das Signal 18 den Wert EINS, so wurde die Referenzmarke 6 erkannt, besitzt das Signal 18 den Wert NULL, so befindet sich ein regelmäßiges Element vor den Sensoren 9, 10.

## Patentansprüche

1. Winkelmesseinrichtung (1), umfassend zumindest einen Messwertgeber (2), der eine Anzahl komplementärer, paarweise angeordneter signalgebender Elemente (3, 4) aufweist, die ein Muster von Signalen (5) erzeugen, wobei die Elemente (3, 4) zur Bildung einer Referenzmarke (6) an zumindest einer Stelle unregelmäßig ausgebildet sind sowie eine Einrichtung (7) zur Erfassung der Signale und eine Auswerteeinheit (8), **dadurch gekennzeichnet, dass** die Einrichtung (7) zumindest einen ersten (9) und einen zweiten Sensor (10) aufweist.

2. Winkelmesseinrichtung nach Anspruch 1, **dadurch gekennzeichnet, dass** die Sensoren (9, 10) in Umfangsrichtung betrachtet beabstandet voneinander angeordnet sind.

3. Winkelmesseinrichtung nach Anspruch 1 oder 2, **dadurch gekennzeichnet, dass** der Abstand der Sensoren (9, 10) zueinander größer ist als das kürzeste signalgebende Element (3) und kürzer ist als das längste signalgebende Element (11).

4. Winkelmesseinrichtung nach einem der Ansprüche 1 bis 3, **dadurch gekennzeichnet, dass** der Abstand der Sensoren (9, 10) zueinander größer ist als das kürzeste nichtsignalgebende Element (4) und kürzer ist als das längste nichtsignalgebende Element (12),

5. Winkelmesseinrichtung nach einem der Ansprüche 1 bis 4, **dadurch gekennzeichnet, dass** die Elementepaare (3, 4) im Wesentlichen die gleiche Länge aufweisen und die Länge eines unregelmäßigen Elementepaars (11, 12) im Vergleich zu den regelmäßigen Elementepaaren (3, 4) größer ist.

6. Winkelmesseinrichtung nach Anspruch 5, **dadurch gekennzeichnet, dass** das unregelmäßige Elementepaar (11, 12) die doppelte Länge eines regelmäßigen Elementepaars (3, 4) aufweist.

7. Winkelmesseinrichtung nach einem der Ansprüche 1 bis 4, **dadurch gekennzeichnet, dass** die Elemente der Elementepaare (3, 4) eine unterschiedliche Länge aufweisen und dass das Längenverhältnis an einem unregelmäßigen Elementepaar (11, 12) im Vergleich zu den regelmäßigen Elementepaaren (3, 4) umgekehrt ist.

8. Winkelmesseinrichtung nach Anspruch 7, **dadurch gekennzeichnet, dass** das Längenverhältnis der Elemente je Elementepaar (3, 4) 45:55 beträgt.

9. Winkelmesseinrichtung nach einem der Ansprüche 1 bis 8, **dadurch gekennzeichnet, dass** der Messwertgeber (2) elektromagnetische Signale erzeugt.

10. Winkelmesseinrichtung nach einem der Ansprüche 1 bis 8, **dadurch gekennzeichnet, dass** der Messwertgeber (2) optische Signale erzeugt.

11. Verfahren zur Winkelmessung mit einer Winkelmesseinrichtung (1) gemäß einem der vorherigen Ansprüche, bei dem mittels der Auswerteeinheit (2) der in Drehrichtung zweite Sensor (10) überwacht wird, wobei bei einem durch den zweiten Sensor (10) detektierten Signalwechsel das Signal (5) des ersten Sensors (9) überprüft wird und mit dem Signal (5) des zweiten Sensors (10) verglichen wird.

12. Verfahren nach Anspruch 11, **dadurch gekennzeichnet, dass** bei dem Durchgang der Referenzmarke (6) gleichartige Signale (5) durch die Sensoren (9, 10) detektiert werden.

13. Verfahren nach Anspruch 11 oder 12, **dadurch gekennzeichnet, dass** mittels der Auswerteeinheit (2) der zweite Sensor (10) auf Detektion ansteigender Flanken (13) überwacht wird.
